**Europäisches Patentamt**

**European Patent Office**

**Office européen des brevets**

(19)

(11) Veröffentlichungsnummer : **0 346 287 B1**

## (12) EUROPÄISCHE PATENTSCHRIFT

(45) Veröffentlichungstag der Patentschrift :
**19.08.92 Patentblatt 92/34**

(51) Int. Cl.$^5$ : **B23C 1/00**

(21) Anmeldenummer : **89810426.0**

(22) Anmeldetag : **06.06.89**

(54) **Einrichtung zum Einfräsen von Nuten in Stanzunterlagsplatten.**

(30) Priorität : **10.06.88 CH 2229/88**

(43) Veröffentlichungstag der Anmeldung :
**13.12.89 Patentblatt 89/50**

(45) Bekanntmachung des Hinweises auf die
Patenterteilung :
**19.08.92 Patentblatt 92/34**

(84) Benannte Vertragsstaaten :
**CH DE FR GB IT LI**

(56) Entgegenhaltungen :
**DE-A- 3 440 786**
**FR-A- 762 141**
**US-A- 3 935 788**
**US-A- 4 658 485**

(73) Patentinhaber : **Servo Handels- & Werbe AG**
**Museumstrasse 10**
**CH-3000 Bern 6 (CH)**

(72) Erfinder : **Blumer, Hans, Jr.**
**Boppelserstrasse**
**CH-8112 Otelfingen (CH)**

(74) Vertreter : **Schweizer, Hans et al**
**Bovard AG Patentanwälte VSP**
**Optingenstrasse 16**
**CH-3000 Bern 25 (CH)**

EP 0 346 287 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Einfräsen von Nuten in Stanzunterlagsplatten gemäss dem Oberbegriff des Patentanspruches 1.

Bei der Produktion von meistens auch mit Falzlinien versehenen Kartonzuschnitten, beispielsweise für die Verpackungsindustrie, benötigt man zum Anbringen auf der Gegenplatte der Presse eine möglichst genau nach dem Muster der Stanz- und Falzmesser mit Nuten versehene Stanzunterlagsplatte. Letztere ist in der Fachwelt auch unter dem Begriff "Gegenstandsplatte" oder "Schaukelplatte" bekannt.

Eine Einrichtung zum Einfräsen von Nuten in Stanzunterlagsplatten ist in CH-A 511 086 offenbart. Parallelitäts- und Rechtwinkligkeitsfehler von mit dieser Einrichtung auf eine Stanzunterlagsplatte eingefrästen Nuten können weitgehend vermieden werden. Der grösste Teil der Herstellzeit einer Stanzunterlagsplatte wird dazu verwendet, die Einrichtung einzustellen, vor allem, um die Parallelität zwischen der Fräsrichtung eines vorhandenen Fräskopfes und einer auf der Stanzunterlagsplatte markierten, zum Entlangfräsen bestimmten Linie auszurichten. Mehrere sich wiederholende, gleiche Arbeitsvorgänge, wie das Zuführen des in zwei zueinander im rechten Winkel stehenden Koordinatenrichtungen beweglichen Fräskopfes zu der zu fräsenden Linie, Kontrolle der Parallelität durch Entlangfahren des Fräskopfes an der zu fräsenden Linie, Korrektur der Parallelität durch Drehen eines mit der aufgespannten Stanzunterlagsplatte versehenen Drehtellers, Nachjustieren des Fräskopfes auf die zu fräsende Linie usw. sind dazu erforderlich.

Der vorliegenden Erfindung liegt die Aufgabe zugrunde, eine verbesserte Einrichtung zu schaffen, welche es ermöglicht, das Ausrichten der Parallelität zu vereinfachen und dadurch die Einstellzeiten zu verkürzen und das Herstellen der Stanzunterlagsplatten weiter zu beschleunigen.

Diese Aufgabe ist gemäss den im kennzeichnenden Teil des Patentanspruches 1 aufgeführten Merkmalen gelöst.

Im folgenden wird die Erfindung anhand von Zeichnungen beispielsweise näher erläutert. Es zeigen

Fig. 1 ein Ausführungsbeispiel der erfindungsgemässen Einrichtung in perspektivischer Darstellung,

Fig. 2 eine die Anordnung der Fräsvorrichtung darstellende Aufsicht auf die Einrichtung gemäss Fig. 1,

Fig. 3 die Ausführung des einen Endbereiches der schwenkbaren Schiene als Längsschnitt entlang der Linie III-III der Fig. 2,

Fig. 4, 5 die Ausführung des anderen Endbereiches der schwenkbaren Schiene je als Längsschnitt entlang der Linien IV-IV bzw. V-V der Fig. 2,

Fig. 6 einen Querschnitt durch die schwenkbare Schiene entlang der Linie VI-VI der Fig. 2 und

Fig. 7 einen Querschnitt durch die nicht schwenkbare Schiene entlang der Linie VII-VII der Fig. 2.

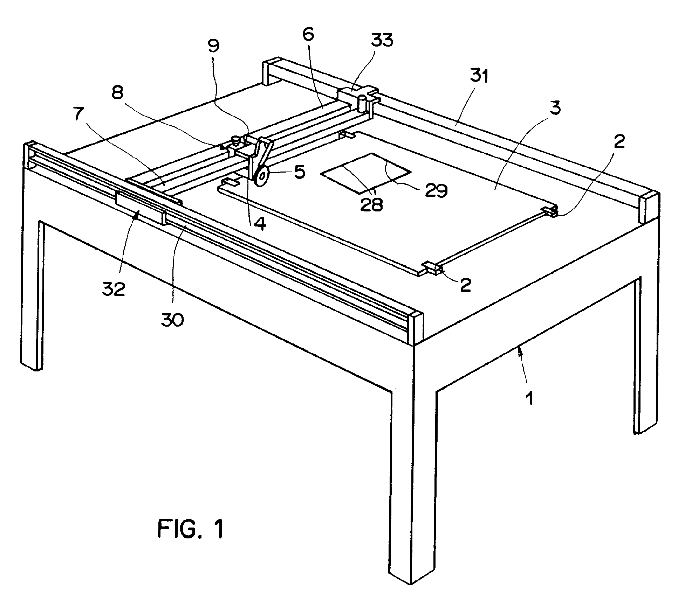

In der Fig. 1 ist ein Ausführungsbeispiel der erfindungsgemässen Einrichtung dargestellt. Ein eine ebene Arbeitsfläche aufweisender Unterteil 1 ist mit Festhaltemitteln 2 zum Festhalten einer zu bearbeitenden Stanzunterlagsplatte 3 auf der ebenen Arbeitsfläche ausgerüstet. Die Stanzunterlagsplatte 3 wird beim Aufspannen von Auge so ausgerichtet, dass die angezeichneten Fräslinien 28 grob mit der Fräsrichtung des Nutenfräswerkzeuges 5 übereinstimmen. Nach dem Fräsen der Nuten längs den Fräslinien 28 wird die Stanzunterlagsplatte 3 umgespannt, so dass nun die Fräslinien 29 in der Fräsrichtung des Nutenfräswerkzeuges 5 liegen.

Zwei Schienen 6, 7 sind mittels Schiebevorrichtungen 32, 33 auf je einer Führung 30, 31 angeordnet und in einer ersten Koordinatenrichtung längs der genannten Führungen 30, 31 verschiebbar. Die erste Schiene 6 ist mit den Schiebevorrichtungen 32, 33 verbunden und steht rechtwinklig zu den Führungen 30, 31. Die zweite Schiene 7 ist im wesentlichen parallel, benachbart zur ersten Schiene 6 angeordnet und mit den Schiebevorrichtungen 32, 33 bewegbar verbunden. Ein längs der ersten Schiene 6 verschiebbar angeordneter Schlitten 8 steht auf der der zweiten Schiene 7 zugewandten Seite der ersten Schiene 6 vor und liegt an der zweiten Schiene 7 an. Die zweite Schiene 7 ist um den Berührungspunkt mit dem Schlitten 8 schwenkbar. Die Fräsvorrichtung 4 mit dem absenkbaren Nutenfräswerkzeug 5 ist auf der zweiten Schiene 7 angeordnet und längs letzterer in einer zweiten Koordinatenrichtung bewegbar.

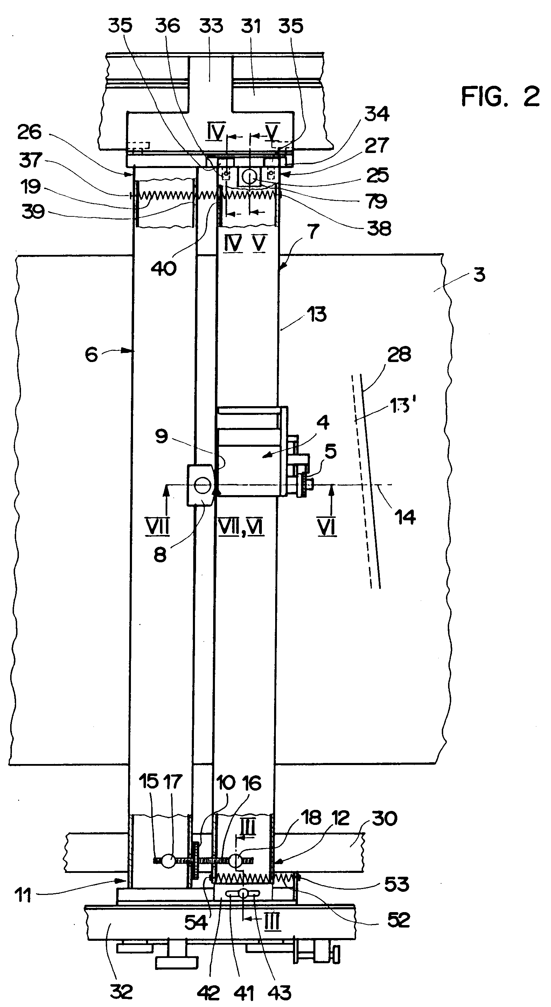

In der Fig. 2 ist die Anordnung der Fräsvorrichtung 4 im Detail dargestellt. Die Einstellung und die Ausrichtung auf Parallelität des an der Fräsvorrichtung 4 angeordneten Nutenfräswerkzeuges 5 auf eine auf der Stanzunterlagsplatte 3 angezeichnete Fräslinie 28 ist anhand dieser Figur erklärbar.

Wie bereits erwähnt, ist die erste Schiene 6 in ihren beiden Endbereichen 11, 26 mit den längs den Führungen 30, 31 verschiebbaren Schiebevorrichtungen 32, 33 rechtwinklig verbunden. Die zweite Schiene 7 ist mit dem einen Endbereich 12 mit der einen Schiebevorrichtung 32 im wesentlichen längs der Führung 30 verschiebbar angeordnet. Der andere Endbereich 27 ist in der Schiebevorrichtung 33 längs der Führung 31 verschiebbar montiert. Der längs der ersten Schiene 6 verschiebbar angeordnete Schlitten 8 weist auf der der zweiten Schiene 7 zugewandten Seite eine in Längsrichtung der Schiene 7 bomierte Anliegefläche 9 auf. Eine Scheibe 10 ist in ihrem Zentrum von einer Gewindestange 15, 16 mit gegenläufigem Gewinde durchsetzt. Der eine Teil 15 der Gewindestange, der beispielsweise mit einem Rechtsgewinde versehen sei, ist in einem im einen Endbereich 11 der ersten Schiene 6 drehbar gelagerten Zapfen 17 eingeschraubt und der andere Teil 16 der Gewindestange, die ein Linksgewinde aufweise, ist in einem im einen Endbereich 12 der zweiten Schiene 7 drehbar angeordneten weiteren Zapfen 18 eingeschraubt. Durch das Drehen in der einen oder anderen Richtung der als Einstellmittel dienenden Scheibe 10 wird der eine Endbereich 12 der zweiten Schiene 7 vom einen Endbereich 11 der ersten Schiene 6 entfernt oder angenähert. Dadurch, dass ein als Zugfeder 19 ausgebildetes Federmittel an seinem ersten Ende im anderen Endbereich 26 mit einem ersten Feststellmittel 37 mit der ersten Schiene 6 verbunden und mit seinem zweiten Ende im anderen Endbereich 27 mit einem zweiten Feststellmittel 38 mit der zweiten Schiene 7 verbunden ist, wird der andere Endbereich 27 der zweiten Schiene 7 zum anderen Endbereich 26 der ersten Schiene 6 herangezogen. In den beiden einander zugewandten Schenkeln der im Querschnitt U-förmigen Schienen 6, 7 sind Aussparung 39, 40 zum Durchführen der Zugfeder 19 vorgesehen. Durch das Drehen der Scheibe 10 in der einen oder anderen Richtung führt der zweite Balken 7 eine Schwenkbewegung um den Schlitten 8 mit der Anliegefläche 9 aus.

Zum Einstellen des Nutenfräswerkzeuges 5 auf die angezeichnete Fräslinie 28 und zum Ausrichten der Parallelität wird wie folgt vorgegangen. Die Schiebevorrichtungen 32, 33 werden längs den Führungen 30, 31 verschoben, bis das Nutenfräswerkzeug 5 über der angezeichneten Fräslinie ungefähr mittig ihrer Länge der angezeichneten Fräslinie 28 über letzterer liegt. Der Schlitten 8 mit seiner in Längsrichtung der Schiene 7 bombierten Anliegefläche 9 wird dabei zusammen mit der Fräsvorrichtung 4 in Längsrichtung der ersten Schiene 6 bzw. der zweiten Schiene 7 verschoben, so dass die Verlängerung der Fräsachse 14 durch den Anliegepunkt der zweiten Schiene 7 an der Anliegefläche 9 verläuft. Durch Drehen der Scheibe 10 wird die zweite Schiene so um die bomierte Anliegefläche 9 des Schlittens 8 geschwenkt, dass die Schienenkante 13 der zweiten Schiene 7 parallel zur angezeichneten Fräslinie 28 verläuft (in der Figur mit dem Bezugszeichen 13' dargestellt). Da sich der Schwenkpunkt der zweiten Schiene 7 auf der Fräsachse 14 befindet, ist für den geübten Bediener nach dem Ausrichten der Parallelität ein erneutes Nachstellen der Schiebevorrichtungen 32, 33 nicht erforderlich. Das Einstellen des Nutenfräswerkzeuges 5 auf eine angezeichnete Fräslinie 28 und das Ausrichten der Parallelität ist bei der erfindungsgemässen Einrichtung wie oben beschrieben in je einem einzigen Arbeitsschritt durchführbar. Dadurch sind erhebliche Einsparungen an Einstell- und Ausrichtzeiten beim Herstellen einer Stanzunterlagsplatte möglich.

Im einen Endbereich 12 der zweiten Schiene 7 ist ein ebenfalls als Zugfeder 52 ausgebildetes zweites Federmittel mit Befestigungsmitteln 53, 54 auf seiner einen Seite mit der Schiebevorrichtung 32 und auf seiner anderen Seite mit der zweiten Schiene 7 verbunden. Durch die Wirkung der Zugfeder 52 wird das Spiel der Gewinde auf der Gewindestange 15, 16 sowie in den beiden Zapfen 17, 18 zum Unterstützen einer genauen und raschen Einstellung der Fräsvorrichtung 4 aufgehoben. Bevor mit dem eigentlichen Fräsvorgang durch das Verschieben der Fräsvorrichtung 4 längs der zweiten Schiene 7 mit abgesenktem Nutenfräswerkzeug 5 begonnen wird, wird die eingestellte Schwenklage der zweiten Schiene 7 mit dem Mittel 25 wie weiter hinten genauer erklärt, arretiert.

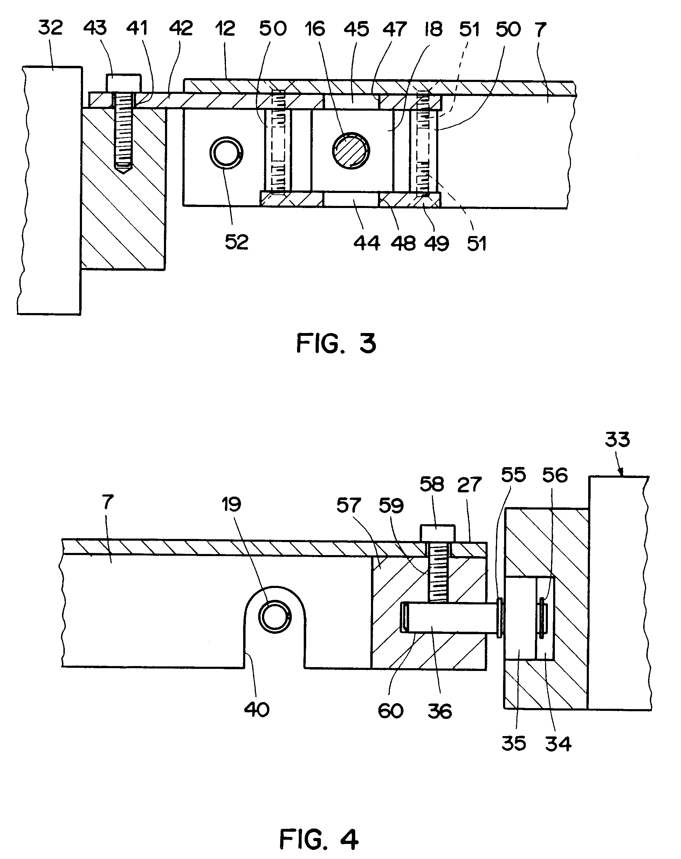

In der Fig. 3 ist ein Teilschnitt (Fig. 2, Linie III-III) des einen Endbereiches 12 der zweiten Schiene 7 dargestellt. Eine Platte 42 ist im Endbereich 12 der zweiten Schiene 7 mit deren zentralem Schenkel beispielsweise verschweisst. Der Zapfen 18 mit dem eingeschraubten Teil der Gewindestange, 16 weist einen unteren und einen oberen Ansatz 44, 45 auf. Der obere Ansatz 45 ist in einer Bohrung 47 der Platte 42 und der untere Ansatz 44 ist in eine Bohrung 48 einer Gegenplatte 49 gelagert, welche mittels Senkschrauben 51 und Distanzbolzen 50 festgehalten ist. Durch diese beschriebene Konstruktion wird die drehbare Lagerung des Zapfens 18 in der zweiten Schiene 7 erreicht. Die Platte 42 ragt über das Ende der zweiten Schiene 7 vor und weist auf dem vorstehenden Teil eine quer zur zweiten Schiene 7 angeordnete längliche Oeffnung 41 auf. Eine durch die genannte Oeffnung geführte Schraube 43 ist in die eine Schiebevorrichtung 32 soweit eingeschraubt, dass die zweite Schiene 7 längs der Oeffnung 41 verschiebbar ist.

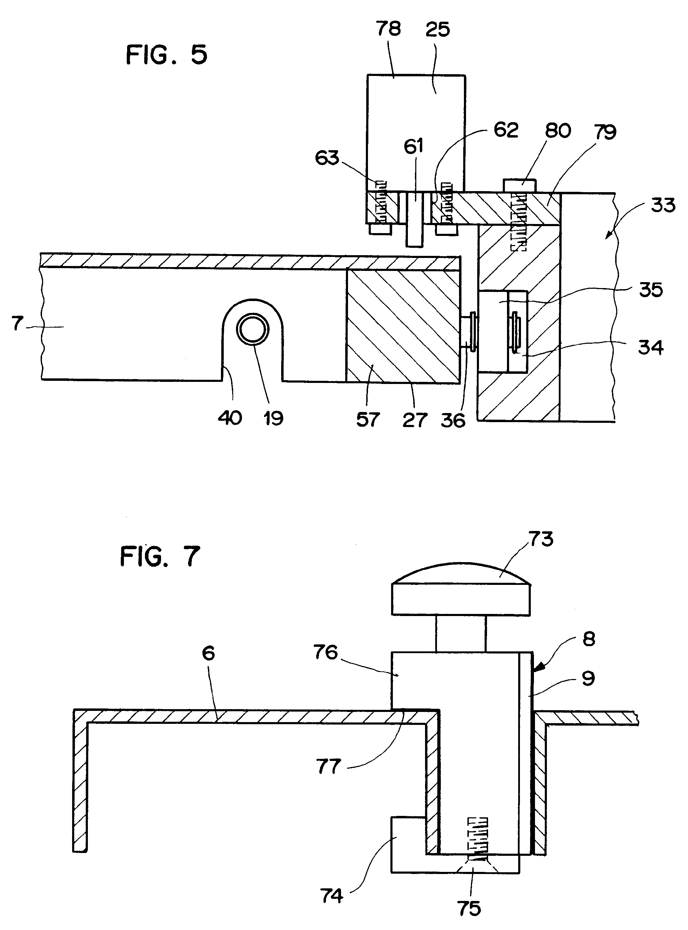

In den Fig. 4 und 5 ist der andere Endbereich 27 der zweiten Schiene 7 in je einem Teillängsschnitt dargestellt. Die Fig. 4 entspricht einem Längsschnitt entlang der Linien IV-IV und die Fig. 5 einem solchen entlang der Linie V-V in der Fig. 2.

Wie bereits gesagt, ist das andere Ende 27 der zweiten Schiene 7 längs zur Führung 31 verschiebbar. Die konstruktive Ausführung dieser Verschiebbarkeit ist in der Fig. 4 dargestellt. In der Schiebevorrichtung 33 ist auf der dem anderen Endbereich 27 der zweiten Schiene 7 zugewandten Seite eine parallel zur Führung 31 und quer zur zweiten Schiene 7 angeordnete Nut 34 vorhanden. Am anderen Endbereich 27 ist eine quer zur genannten Schiene angeordnete Tragvorrichtung 57 beispielsweise mit dem zentralen Schenkel der im Querschnitt U-förmigen Schiene 7 verschweisst. Stirnseitig weist diese Tragvorrichtung zwei Bohrungen 60 auf, deren Achsen je parallel zur Längsrichtung der Schiene 7 verlaufen. In jeder der genannten, in der Tragvorrichtung 57 nicht durchgehenden Bohrungen 60 ist je ein am Ende der zweiten Schiene 7 vorstehender Bolzen 36 eingesetzt. An jedem der vorstehenden Enden ist ein Kugellager 35 vorhanden und beispielsweise mit je einem inneren 55 und äusseren Segerring 56 gesichert. Die Kugellager 35 reichen in die genannte Nut 34 und laufen beim Querverschieben der zweiten Schiene 7 auf der unteren Seitenflanke dieser Nut. Ungefähr mittig jeder der genannten Bohrungen 60 ist rechtwinklig dazu angeordnet je eine vom zentralen Schenkel der zweiten Schiene 7 in jede der Bohrungen 60 führende Gewindebohrung 59 vorhanden. Je eine in die genannten Gewindebohrungen 59 eingeschraubte Schraube dient zum Festhalten der in den Bohrungen 60 eingesetzten Bolzen 36.

In der Fig. 5 ist das Mittel 25 zum Arretieren der in der Schwenklage eingestellten zweiten Schiene 7 dargestellt. Eine Tragplatte 79 ist beispielsweise mittels Schrauben 80 mit der Schiebevorrichtung 33 verbunden. Die Tragplatte 79 ist parallel zur zweiten Schiene 7 angeordnet und überlappt mit seinem von der Schiebevorrichtung 33 abstehenden Teil den anderen Endbereich 27 der zweiten Schiene 7. Das Arretiermittel 25 besteht beispielsweise aus einem Pneumatikzylinder 78, der auf dem den anderen Endbereich 27 der zweiten Schiene 7 überlappenden Teil der Tragplatte 79 mittels Schrauben 63 befestigt ist. Ein Stössel 61 ragt aus dem Pneumatikzylinder 78 durch eine in der Tragplatte 79 vorhandene Bohrung 62 in Richtung der zweiten Schiene 7. Durch Beaufschlagen des Pneumatikzylinders 78 mit Druckgas, beispielsweise mit Druckluft, bewegt sich der Stössel 61 in Richtung der zweiten Schiene 7 und drückt zum Arretieren der eingestellten Schwenklage auf deren zentralen Schenkel.

In den Fig. 4 und 5 ist ebenfalls die Aussparung 40 in dem der ersten Schiene 6 zugewandten Schenkel der zweiten Schiene 7 ersichtlich, durch welche die Zugfeder 19 ragt.

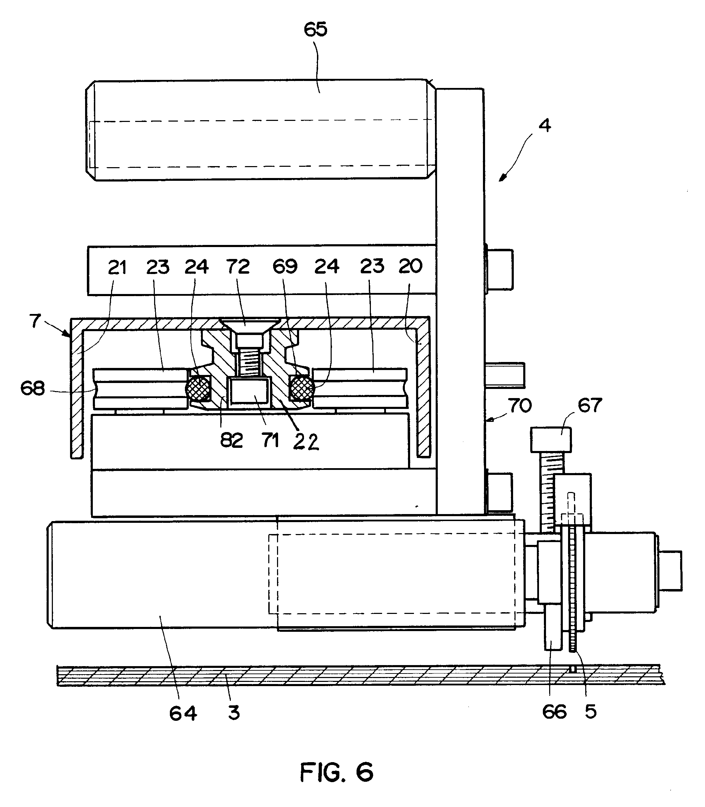

Einen Querschnitt durch die längs der zweiten Schiene 7 verschiebbaren Fräsvorrichtung 4 ist in der Fig. 6 dargestellt. Ungefähr mittig zwischen den Schenkeln 20, 21 ist auf der offenen Seite eine längs der zweiten Schiene 7 und parallel zu den Schenkeln 20, 21 verlaufende Lagerschiene 22 befestigt. Ein Gegenhaltemittel 71 ist in eine dem Unterteil 1 zugewandte erste Nut 82 eingelegt. Das Gegenhaltemittel 71 weist längs der zweiten Schiene 7 in regelmässigen Abständen angeordnete Gewindebohrungen auf, in welche durch den zentralen Schenkel der zweiten Schiene 7 ragende Schrauben 72 geschraubt sind und die Lagerschiene 22 an die zweite Schiene 7 anpressen. Die Lagerschiene 22 weist je eine jedem der Schenkel 20, 21 zugewandte weitere Nut 69 auf. Ein Support 70 der Fräsvorrichtung 4 ragt von der offenen Seite her in die zweite Schiene 7 und weist zwischen jedem der Schenkel 20, 21 und der Lagerschiene 22 je zwei Laufräder 23 auf. Jedes der Laufräder 23 besitzt auf seinem Umfang eine kreissegmentförmige Einkerbung 68. In den genannten weiteren Nuten 69 sind Kugeln 24 angeordnet, die in die Einkerbung 68 ragen und dadurch die Fräsvorrichtung 4 tragen. In der Zeichnung nicht dargestellte Mitnehmer sorgen dafür, dass die Kugeln 24 beim Verschieben der Fräsvorrichtung 4 mit letzterer in der Verschieberichtung mitlaufen. Mit den Laufrädern 23 und den Kugeln 24 als Lagermittel ist ein praktisch reibungsloses Verschieben der Fräsvorrichtung 4 längs der zweiten Schiene 7 gewährleistet.

Am Support 70 der Fräsvorrichtung 4 ist ein Pneumatikmotor 64 befestigt, auf dessen Rotorachse das Nutenfräswerkzeug 5 angeordnet ist. Mit einem Führungsgriff 65 lässt sich zum Fräsen einer Nute in die Stanzunterlagsplatte 3 das Nutenfräswerkzeug absenken. Die Frästiefe wird von einem mit einer Stellschraube 67 verstellbaren Anschlag 66 begrenzt.

Die Fig. 7 zeigt als Querschnitt durch die erste Schiene 6 die Anordnung des Schlittens 8 mit der der zweiten Schiene 7 zugewandten bombierten Anliegefläche 9. An dem der zweiten Schiene 7 zugewandten Schenkel der Schiene 6 ist der einen Ansatz 77 aufweisende Schlittenkörper 76 aussen anliegend angeordnet. Ein im wesentlichen im Querschnitt L-förmiger Gegenhalter 74 umgreift das Ende des genannten Schenkels der Schiene 6 und ist beispielsweise mit Schrauben 75 mit dem Schlittenkörper 76 verschraubt. Ein im wesentlichen pilzförmiger Griff 73 ist oben am Schlittenkörper 76 zum einfachen Verschieben des Schlittens 8 längs der ersten Schiene 6 angeordnet.

## Patentansprüche

1. Einrichtung zum Einfräsen von Nuten in Stanzunterlagsplatten (3), mit einem Unterteil (1) mit Mitteln (2) zum Festhalten einer Stanzunterlagsplatte (3) und einer in zwei Koordinatenrichtungen beweglich geführten Fräsvorrichtung (4) mit einem absenkbaren Nutenfräswerkzeug mit einer in der einen Koordinatenrichtung verschiebbaren ersten Schiene (6) (5), dadurch gekennzeichnet, dass zu der ersten Schiene eine benachbarte, im wesentlichen parallel dazu angeordnete zweite Schiene (7) vorhanden ist, dass ein längs der ersten Schiene (6) verschiebbarer, auf der der zweiten Schiene (7) zugewandten Seite vorstehender Schlitten (8) vorhanden ist, dass die zweite Schiene (7) am Schlitten (8) anliegt und um diesen schwenkbar ist und dass die Fräsvorrichtung (4) längs der zweiten Schiene in der zweiten Koordinatenrichtung verschiebbar ist.

2. Einrichtung nach Anspruch 1, dadurch gekennzeichnet, dass der Schlitten (8) auf der der zweiten Schiene (7) zugewandten Seite eine in Längsrichtung zu der genannten Schiene bombierte Anliegefläche (9) aufweist.

3. Einrichtung nach Anspruch 2, dadurch gekennzeichnet, dass ein mit der ersten (6) und der zweiten Schiene (7) zusammenwirkendes Einstellmittel (10) zum Schwenken der zweiten Schiene (7) um die Anliegefläche (9) vorhanden ist.

4. Einrichtung nach Anspruch 3, dadurch gekennzeichnet, dass das Einstellmittel eine je im einen Endbereich (11,12) zwischen den genannten Schienen (6, 7) angeordnete Scheibe (10) umfasst, dass die Scheibe (10) in ihrem Zentrum von einer mit gegenläufigen Gewinde versehenen Gewindestange (15, 16) durchsetzt ist und dass der eine Teil (15) der mit einem Rechtsgewinde versehenen Gewindestange in einem mit der ersten Schiene (6) drehbar gelagerten Zapfen (17) und der andere Teil (16) der mit einem Linksgewinde versehenen Gewindestange in einen mit der zweiten Schiene (7) drehbar gelagerten weiteren Zapfen (18) eingeschraubt sind.

5. Einrichtung nach Anspruch 4, dadurch gekennzeichnet, dass ein die anderen Endbereiche (26, 27) der ersten (6) und der zweiten Schiene (7) zusammenziehendes Federmittel (19) vorhanden ist.

6. Einrichtung nach einem der Ansprüche 1 bis 5, dadurch gekennzeichnet, dass der Querschnitt der zweiten Schiene (7) U-förmig und mit der offenen Seite dem Unterteil zugewandt ist, dass zwischen den Schenkeln (20, 21) eine parallel zu diesen verlaufende Lagerschiene (22) angeordnet ist und dass mit der Lagerschiene (22) und der Fräsvorrichtung (4) zusammenwirkende Mittel (23, 24) zum verschiebbaren Lagern der Fräsvorrichtung vorhanden sind.

7. Einrichtung nach einem der Ansprüche 1 bis 6, dadurch gekennzeichnet, dass ein Mittel (25) zum Arretieren der eingestellten Schwenklage der zweiten Schiene (7) vorhanden ist.

## Revendications

1. Appareil de fraisage de rainures dans des plaques de support (3), comprenant une partie inférieure (1), des moyens de maintien (2) d'une plaque de support (3) et un dispositif de fraisage (4) mobile selon deux directions de coordonnées perpendiculaires, avec un outil de fraisage de rainure rabattable (5), avec un premier rail (6) déplaçable selon une première direction de coordonnée, caractérisé en ce que un deuxième rail (7) contigu est disposé de manière généralement parallèle au premier rail, qu'un chariot (8) est prévu, déplaçable le long du premier rail (6), faisant saillie du côté faisant face au deuxième rail (7), que le deuxième rail (7) est proche du chariot (8) et est pivotant autour de celui-ci et en ce que le dispositif de fraisage (4) est déplaçable selon la deuxième direction de coordonnée le long du deuxième rail.

2. Appareil selon la revendication 1, caractérisé en ce que le chariot (8) comprend, du côté faisant face au deuxième rail (7), une surface proche (9), bombée selon la direction longitudinale dudit rail.

3. Appareil selon la revendication 2, caractérisé en ce qu'un moyen de réglage (10) est prévu, agissant simultanément sur le premier (6) et le deuxième rail (7), pour faire pivoter le deuxième rail (7) autour de la surface bombée (9).

4. Appareil selon la revendication 3, caractérisé en ce que le moyen de réglage comprend un disque (10) disposé entre les extrémités (11,12) desdits rails (6,7), en ce que le disque (10) est traversé en son centre d'une tige filetée (15,16) comprenant des filetages opposés, et en ce que la première partie (15) de la tige filetée, munie d'un filetage à droite, est vissée dans un tenon (17) fixé de manière pivotante sur le premier rail (6), alors que la deuxième partie (16) de la tige filetée, munie d'un filetage à gauche, est vissée dans un autre tenon (18) fixé de manière pivotante sur le deuxième rail (17).

5. Appareil selon la revendication 4, caractérisé en ce qu'un moyen à ressort (19) est prévu pour rapprocher les autres extrémités (26,27) du premier (6) et du deuxième rail (7).

6. Appareil selon l'une des revendications 1 à 5, caractérisé en ce que le deuxième rail (7) est en forme de U, le côté ouvert faisant face à la partie inférieure, en ce qu'un rail d'appui (22) est disposé parallèlement et entre les deux côtés (20,21) et en ce que des moyens (23,24) coopérant avec le rail d'appui (22) et le dispositif de fraisage (4) sont prévus, pour maintenir le dispositif de fraisage de manière mobile.

7. Appareil selon l'une des revendications 1 à 6, caractérisé en ce qu'un moyen d'arrêt (25) est prévu, pour limiter le mouvement de pivotement du deuxième rail (7).

7. Appareil selon l'une des revendications 1 à 6, caractérisé en ce qu'un moyen d'arrêt (25) est prévue, pour limiter le mouvement de pivotement du deuxième rail (7).

## Claims

1. Apparatus for milling grooves in support plates (3), with a bottom portion (1) with means (2) for gripping a support plate (3) and a milling device (4) displaceably guided in two coordinate directions with a lowerable groove milling tool (5) with a first track (6) which is displaceable in one of the coordinate directions, characterized in that in addition to the first track there is an adjacent second track (7) disposed essentially parallel thereto, in that there is a slide (8) which is displaceable along the first track (6) projecting on the side nearest the second track (7), in that the second track (7) abuts the slide (8) and is pivotable about the latter and in that the milling device (4) is displaceable along the second track in the second coordinate direction.

2. Apparatus according to claim 1, characterized in that on the side nearest the second track (7), the slide has an abutting surface (9) curved outwardly in the longitudinal direction to the said track.

3. Apparatus according to claim 2, characterized in that there is an adjustment means (10) cooperating with the first (6) and the second track (7) to pivot the second track (7) about the abutting surface (9).

4. Apparatus according to claim 3, characterized in that the adjusting means comprises a disk (10) disposed in each end portion (11, 12) between said tracks (6, 7), in that the disk (10) is penetrated at its centre by a threaded rod (15, 16) provided with opposed threads and in that one portion (15) of the threaded rod provided with a right thread is screwed into a plug (17) which is rotatably mounted with the first track (6) and the other portion (16) of the threaded rod provided with a left thread is screwed into another plug (18) rotatably mounted with the second track (7).

5. Apparatus according to claim 4, characterized in that there is a spring means (19) which draws together the other end portions (26, 27) of the first (6) and second track (7).

6. Apparatus according to one of claims 1 to 5, characterized in that the cross-section of the second track (7) is U-shaped and its open side is nearest the bottom portion, in that between the arms (20, 21) is disposed a bearing track (22) running parallel to the latter, and in that there are means (23, 24) cooperating with the bearing track (22) and the milling device (4) to displaceably mount the milling device.

7. Apparatus according to one of claims 1 to 6, characterized in that there is a means (25) for blocking the adjusted pivot position of the second track (7).

FIG. 1

FIG. 2

FIG. 3

FIG. 4

FIG. 5

FIG. 7

FIG. 6